# EUROPEAN PATENT APPLICATION

(11) **EP 0 836 317 A2**
(43) Date of publication of application: **15.04.1998**
(21) Application number: 97307899.1
(22) Date of filing: 07.10.1997
(51) Int. Cl.: H04N 1/405

(54) **Halftone dithering**

(30) Priority: 10.10.1996 US 729082
(71) Applicant: Hewlett-Packard Company, Palo Alto, California 94304 (US)
(72) Inventor: McGuire, Michael D., Palo Alto, California 94301 (US); Shaw, Rodney, Pittsford, N.Y. 14534 (US)
(74) Representative: Jehan, Robert

(57) **Abstract**

A digital halftoning mechanism (100) has blue noise characteristics to significantly improved perceived image quality while significantly decreasing computational requirements. Halftoned binary images are produced from grayscale images by taking the input image a region (150) of pixels at a time, and computing thresholds for every pixel in that region (150), such that the locations of thresholds close in value are as random as possible consistent with being anticorrelated. The method can be applied on-the-fly so that a threshold is located, used and discarded with no need to store it in a mask. Because there is a fresh start for every region (150), it is extremely unlikely that any periodicity due to the halftoning will appear in the output. An alternative way to perform the halftoning process is to compute an anticorrelated thresholding mask and then apply the mask to the image by regions (150). In another alternative, instead of a mask, a list of the locations of the thresholds in the region (150) is stored, addressed by threshold value, and applied to the region (150) of the image by going through the thresholds sequentially. Multiple realizations of the mask or list may be computed, stored and chosen randomly. Quadtrees may be used to address a square region. Alternatively, a "parquet tile" method of recursively addressing a square region may be employed.

## Description

The present invention relates to digital image processing and, more particularly, to halftone dithering of digital images.

Digital halftoning is a way of representing grayscale on a binary digital printer by trading spatial resolution for tonal resolution. This is accomplished by printing an aggregate of black and white dots so that they are perceived as gray at normal viewing distance. There are several ways to determine where to place the black dots to minimize the perceptual effect of the dots themselves in favor of maximizing the perceptual effect of gray. One of these ways is a dither threshold mask. This mask is a two dimensional array of threshold gray values. The dimensions of the array are typically much smaller than those of the image to be halftoned. These thresholds are usually evenly spaced over the range of gray values. The mask is then repeatedly tiled over a grayscale image, so that for every pixel of the image there is a threshold value from the mask. If the pixel gray value is less than the threshold, a black dot is printed in the output image, otherwise it is left white.

The spatial arrangement of thresholds within the dither threshold mask has been the subject of much innovation. In early work the thresholds were set in a spatially ordered sequence that sought to imitate classical photographic halftoning. Other ordered dither arrangements were found which better preserved tonal relationships when the halftones were xerographically copied or displayed on CRTs. This work through 1987 is extensively summarized in the book *Digital Halftoning,* R.A. Ulichney, MIT Press, Cambridge, Massachusetts, 1987.

Ulichney also discusses the possibility of halftoning by noise dithering. Noise in this sense means fluctuations in reflectance or reflection density. Its simplest form is white noise dithering, where at each pixel, a threshold is obtained as a pseudo random number, which falls in the allowed range of gray values of the pixels. Unless white noise dithering is done at very high resolution, the result is very coarse, grainy looking, and disturbing to the eye. The noise is referred to as white noise because the power spectrum of the resulting reflectance fluctuations is relatively flat, i.e., equal power at all frequencies.

Ulichney further observes that a desirable characteristic for the power spectrum for noise halftoning is that it should be blue. That is, the bulk of the power in the spectrum should be concentrated at the blue or high frequency end. If this is done, fluctuations mostly fall above the human spatial frequency bandpass. The resulting blue noise image is smooth and pleasant in appearance when compared to that of white noise, yet has a random structure with no apparent structure.

The only method Ulichney discusses for producing a blue noise dither is error diffusion, originally proposed in "An Adaptive Algorithm for Spatial Gray Scale", R.W. Floyd and L. Steinberg, SID 75 Digest, Society for Information Display, pp. 36-37, 1975. In this method the mask shrinks to a single threshold value, usually 50% gray level. But the error, which is the difference between the threshold and the actual value of the pixel, is distributed in certain proportions, being added algebraically to as yet unprocessed neighboring pixels. Ulichney discusses various possibilities in the details of the proportions and the geometry of the distribution. In general, error diffusion is much more computationally intensive to use than simple masking because of the greater number of operations required to process each pixel.

More recently there have been proposals of other ways to construct blue noise masks (e.g.," Digital Halftoning Using a Blue Noise Mask", T. Mitsa and K.J. Parker, Proc SPIE, Image Proc. Algorithms and techniques, Vol 1452, pp. 47-56, 1991 and "On the Manipulation of Power Spectra of Halftoning Patterns", T. Mitsa, K.J. Parker and R.A. Ulichney, SPSE 7th Int. Congress on Non-Impact Printing, Portland, OR, pp. 471-475, 1991). These approaches are computationally very intense. They start with a white noise dither pattern and, in effect, filter it so that it becomes blue. To do this, at every threshold level the dither pattern must be Fourier transformed to the frequency domain, filtered and transformed back. This could in principle be done for every pixel of an image and the threshold discarded as it is used. However, for an image of any size, the processing time is prohibitive. Therefore, the thresholds are typically stored in a mask or array, just as with ordered dithers, and used the same way. Another disadvantage of this approach is that, as the mask is repeatedly tiled over the input image, periodic artifacts can appear in the output image at a spatial frequency of the reciprocal of the mask size in pixels.

Thus, it can be seen that computational constraints impose perceived image quality limits upon current technology digital halftoning mechanisms and hinder the use of these mechanisms in many applications.

Therefore, there is an unresolved need for a digital halftoning mechanism that will significantly decrease computational requirements while significantly improving perceived image quality.

The present invention seeks to provide improved half-toning.

According to an aspect of the present invention there is provided a method of producing a halftoned binary output image from a grayscale input image as specified in claim 1.

According to another aspect of the present invention there is provided apparatus for producing a halftoned binary output image as specified in claim 7.

The preferred embodiment provides a digital halftoning mechanism which can significantly improve perceived image quality while significantly decreasing computational requirements. This embodiment produces halftoned binary images from grayscale images by taking the input image a region of pixels at a time, and computing thresholds for every pixel in that region, such that the locations of thresholds close in value are as random as possible consistent with being anti-correlated. The method can be applied on-the-fly so that a threshold is located, used and discarded with no need to store it in a mask. Because there is a fresh start for every region. it is extremely unlikely that any periodicity due to the halftoning will appear in the output.

An alternative way to perform the halftoning process is to compute an anti-correlated thresholding mask and then apply the mask to the image by regions. The mask may be selected from a set of masks. In another alternative, instead of a mask, a list of the locations of the thresholds in the region is stored, addressed by threshold value, and applied to the region of the image by going through the thresholds sequentially. In an embodiment that avoids the periodicity problem, multiple realisations of the mask or list are computed, stored and chosen randomly.

For one embodiment, quadtrees are used to address a square region. Alternatively, a "parquet tile" method of recursively addressing a square region is employed.

An embodiment of the present invention is described below. by way of example only, with reference to the accompanying drawings, in which:
Figure 1 is a block diagram illustrating an apparatus employing a preferred embodiment of halftoning mechanism;
Figure 2 is a flow chart that illustrates the method of operation of one version of the apparatus of Figure 1;
Figure 3 is a flow chart illustrating how the halftoning process is practiced according to one embodiment of the present invention wherein an anticorrelated thresholding mask is computed and then the mask is applied to the image by regions;
Figure 4 is a flow chart illustrating how the halftoning process is practiced according to one embodiment of the present invention wherein a list of the locations of the thresholds in the region is stored, addressed by threshold value, and applied to the region of the image by going through the thresholds sequentially;
Figure 5 illustrates a single quadrant level of a quadtree addressing scheme suitable for use within one embodiment of the present invention;
Figure 6 illustrates an eight-bit quadtree addressing scheme suitable for use within one embodiment of the present invention:
Figure 7 illustrates a single level of a "parquet tile" addressing scheme suitable for use within one embodiment of the present invention;
Figure 8 illustrates two levels of a "parquet tile" addressing scheme suitable for use within one embodiment of the present invention; and
Figure 9 illustrates three levels of a "parquet tile" addressing scheme suitable for use within one embodiment of the present invention.

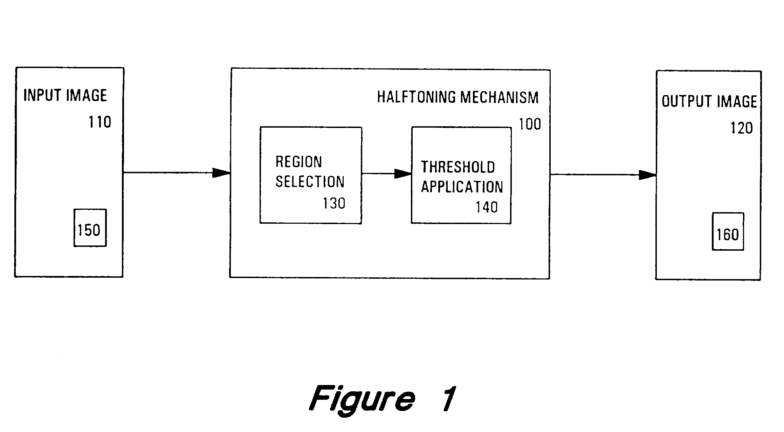

Figure 1 is a block diagram illustrating an apparatus employing a preferred halftoning mechanism. In Figure 1, halftoning mechanism 100 produces a halftoned binary output image 120 from a grayscale input image 110. Apparatus 100 has a region selection mechanism 130 that selects regions of the input image 110 (e.g., region 150). Apparatus 100 also has a threshold application mechanism 140 that applies thresholds to pixels in a selected region to yield a halftoned binary area of the output image 120 (e.g., area 160) such that locations within the region of thresholds close in value are random, consistent with being anticorrelated.

This system stems from looking at blue and white noises from the point of view of the Wiener-Khintchin theorem which states that a power spectrum and its autocorrelation are Fourier transform pairs. The autocorrelation of white noise is maximum at coincidence or zero lag and rapidly falls to zero as the lag or displacement increases. This is a manifestation of the well known fact that white noise is completely uncorrelated. There is no relationship between the locations of thresholds that are close in value. They might be next to each other or they might be far apart. The autocorrelation of blue noise is maximum at zero lag, but becomes strongly negative a short displacement away, and then rises to zero as displacement is increased. Thus blue noise is anti-correlated. So when a given threshold is located, those that are close in value should not, insofar as possible, be near it. This principle is used in the invention to find locations for thresholds so the noise spectrum of a halftoned sample has blue characteristics.

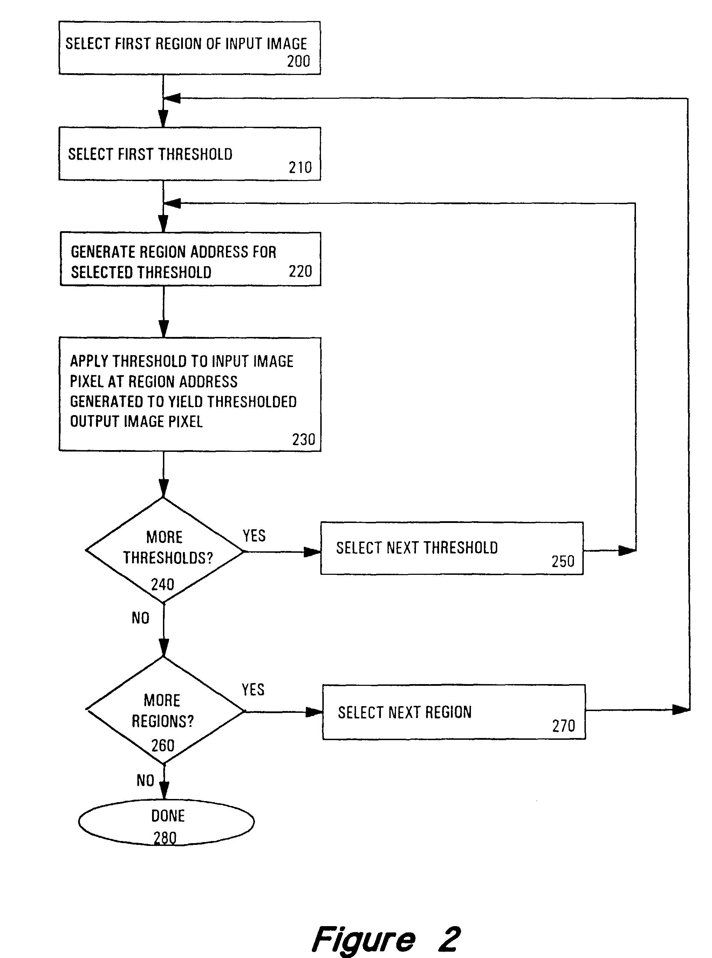

Figure 2 is a flow chart that illustrates the method of operation for one embodiment of the apparatus of Figure 1. The first region of the input image and the first threshold are selected in process blocks 200 and 210, respectively. A region address is generated for the selected threshold in process block 220. Then, in process block 230, the selected threshold is applied to the input image pixel at the region address generated in process block 220 to yield a thresholded output image pixel value.

If there are more thresholds (decision block 240), the next threshold is selected (process block 250) and a region address is then generated for this threshold (process block 220). If there are no more thresholds (decision block 240), a test is made (decision block 260) to determine whether there are more regions.

If there are more regions (decision block 260), the next region is selected (process block 270) and the first threshold for this region is selected (process block 210). If there are no more regions (decision block 260), the process terminates (terminal block 280).

Thus, the present invention produces halftoned binary images from grayscale images by taking the input image a region of pixels at a time, and then computing thresholds for every pixel in that region, such that the locations of thresholds close in value are as random as possible consistent with being anticorrelated. The method can be applied on-the-fly so that a threshold is located, used and discarded with no need to store it in a mask. Because there is a fresh start for every region, it is extremely unlikely that any periodicity due to the halftoning will appear in the output.

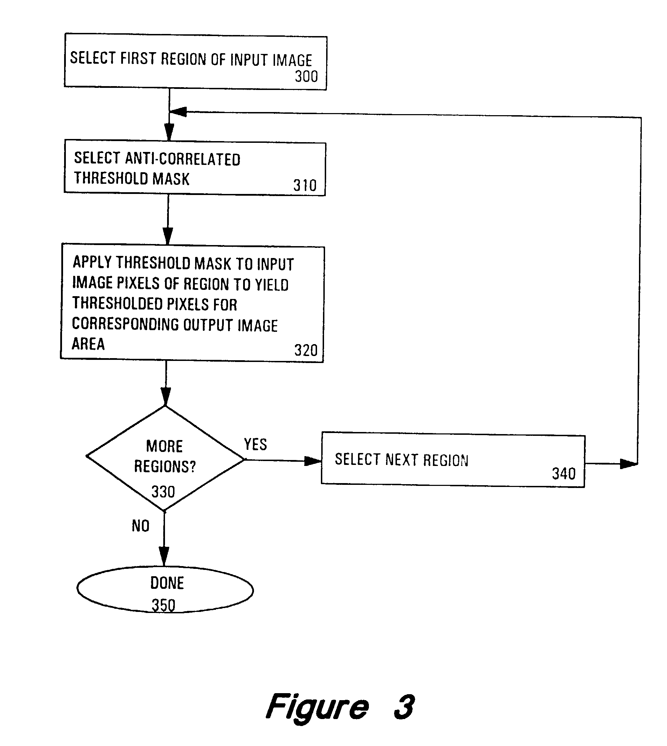

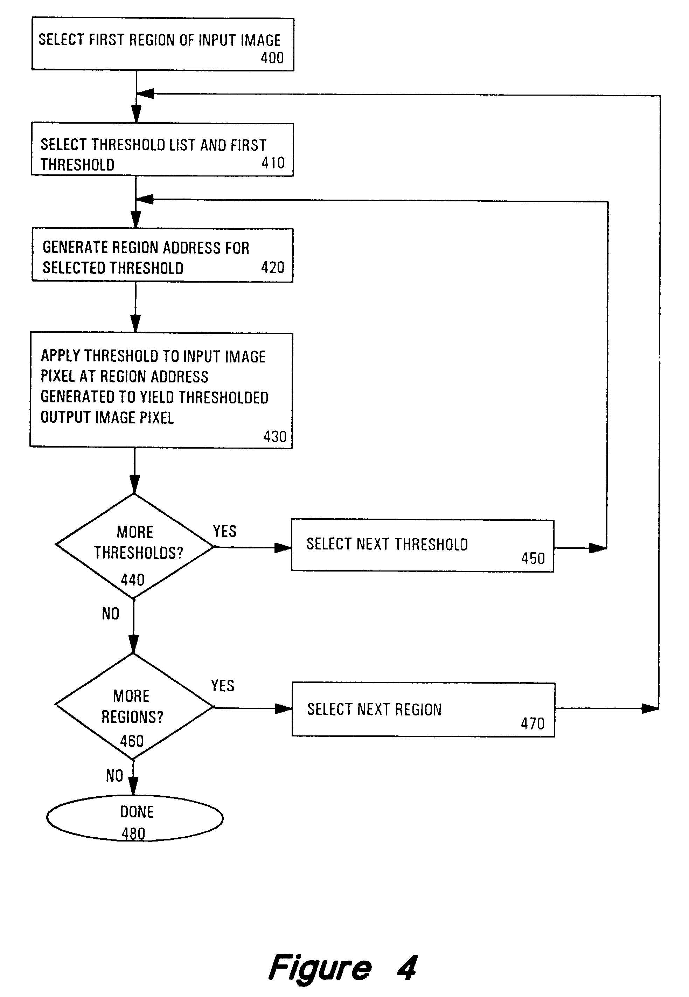

An alternate way to perform the halftoning process is to compute an anticorrelated thresholding mask and then apply the mask to the image by regions. This masking process is illustrated in Figure 3. In another alternate, instead of a mask, a list of the locations of the thresholds in the region is stored, addressed by threshold value, and applied to the region of the image by going through the thresholds sequentially. The threshold location list process is illustrated in Figure 4. In an embodiment that avoids the periodicity problem, multiple realizations of the mask or list are computed, stored and chosen randomly.

Thus, in the masking process of Figure 3, the first region of the input image and an anti-correlated threshold mask are selected in process blocks 300 and 310, respectively. For one embodiment, the anti-correlated threshold mask is precomputed and stored. Alternately, the anti-correlated threshold mask is generated on-the fly.

In process block 330, the selected threshold mask is applied to the input image pixels of the region selected in process block 300 to yield thresholded pixel values for the output image area corresponding to the selected region of the input image.

If there are more regions (decision block 330), the next region is selected (process block 340) and the anti-correlated threshold mask for this region is selected (process block 310). If there are no more regions (decision block 330), the process terminates (terminal block 350).

Alternately, in the threshold location list process of Figure 4, the first region of the input image and the first threshold list (and first threshold) are selected in process blocks 400 and 410, respectively. For one embodiment, the threshold location list is precomputed and stored. Alternately, the threshold location list is generated on-the fly.

A region address is generated for the selected threshold in process block 420. Then, in process block 430, the selected threshold is applied to the input image pixel at the region address generated in process block 420 to yield a thresholded output image pixel value.

If there are more thresholds (decision block 440), the next threshold is selected (process block 450) and a region address is then generated for this threshold (process block 420). If there are no more thresholds (decision block 440), a test is made (decision block 460) to determine whether there are more regions.

If there are more regions (decision block 460), the next region is selected (process block 470) and next threshold list and the first threshold for this region is selected (process block 410). If there are no more regions (decision block 460), the process terminates (terminal block 480). For one embodiment, quadtrees are used to address a N x N region. In this case it is most convenient if N is an integer power of 2. In particular, an N value of 16 gives the possibility of 256 thresholds which corresponds to the commonly used standard of representing grayscale pixels as 8 bit (256) level numbers. Although an N value of 16 will be used herein, it is to be understood that other values for N can be used.

Various addressing schemes are useful when performing halftone dithering as taught herein. One such addressing scheme uses quadtrees.

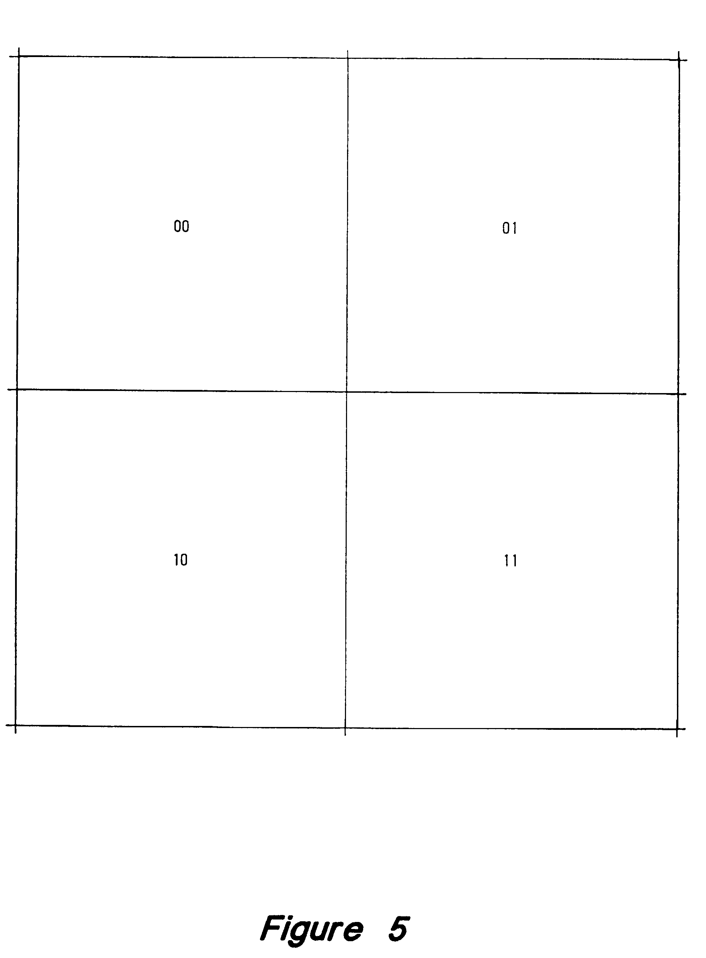

A quadtree is a method of addressing a point in a square by recursively dividing it into quadrants such that the quadrants have subquadrants until the necessary precision of location of the point is achieved. For a 16 x 16 square, four levels suffice, and an 8 bit number uniquely specifies an address. The two most significant bits (msbs) specify which top level quadrant, the next two bits, specify which subquadrant, and so on, two bits at a time. Thus at a given level the quadrants have addresses as shown in Figure 5. In the case where there is a two bit quadtree address, the msb is the vertical address and the lsb (least significant bit) is the horizontal address. Of course, vertical and horizontal are arbitrary directions and one could just as easily say that the msb is the horizontal address and the lsb (least significant bit) is the vertical address

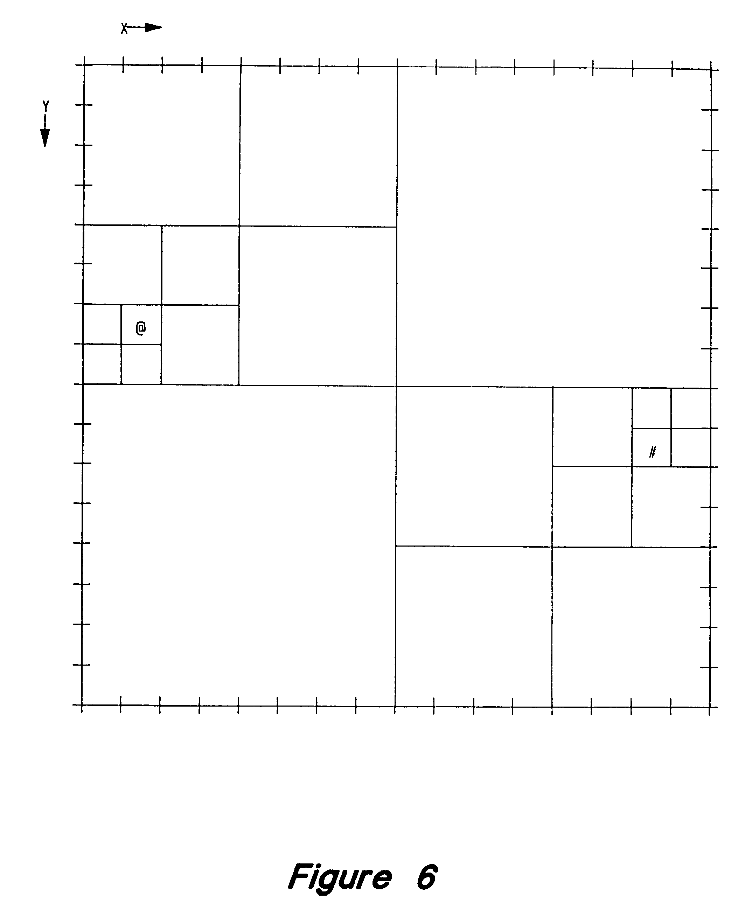

Figure 6 illustrates a quadtree addressing scheme for a 16 x 16 square region. In Figure 6, the x and y direction coordinates have a decimal range from 0 to 15.

The @ is located at address 29h in Figure 6 (where h represents a hexadecimal number). Thus, address 29h is equivalent to the 8-bit number 00 10 10 01. For this address, the y coordinate has a 0110 binary value (equal to 6 decimal), and the x coordinate has a 0001 binary value (equal to 1 decimal).

Similarly, the # is located at address D6h in Figure 6. Thus, address D6h is equivalent to the 8-bit number 11 01 01 10. For this address, the y coordinate has a 1001 binary value (equal to 9 decimal), and the x coordinate has a 1110 binary value (equal to 14 decimal).

The requirement that thresholds close in value not be close together yet be random is met at each level of the quadtree by choosing the first quadrant at random. The next threshold is required to be in the quadrant diagonally opposite. For consistency and simplicity a choice is made go up or down to get the third quadrant, with the final quadrant being diagonally opposite it. The choice for the third could just as well have been left or right with no noticeable difference. It follows that, at each quadtree level in each individual set of four subquadrants, once the first of the four is chosen, the order of going to the other three is determined. The overall effect of this is that after the first 64 thresholds are explicitly located, the rest are implicitly located by the above set of rules.

One increments through the thresholds starting from zero. The location of the first has its full 8 bits at random. The next three thresholds have 6 bits at random, their two msbs having been determined by the two msbs of the first choice by the above rules. The next 12 thresholds have 4 bits at random, their 4 msbs being determined by the previous choices. The next 48 thresholds have two bits at random, their 6 msbs being determined by the previous choices. At this point, the locations of the first 64 thresholds are actually determined and the rest implicitly. In fact when location of a threshold is determined, the rules imply that the threshold 64 levels greater is diagonally opposite in the bottom level 2 x 2 region, and the one 64 above it is above or below, and so on. As the locations are determined, the grayscale image at that location is compared to the threshold and the binary output pixel is set black or not accordingly.

The use of quadtrees is extremely efficient. Only 170 bits of random number are required for each 16 x 16 square. This is less than one bit per pixel. Once the random numbers are obtained, only the simple boolean operations AND, OR, and XOR are required to get the locations of the thresholds. No complex floating point operations such as Fourier transforms are required. Because there is a fresh start for every 16 x 16 square, it is extremely unlikely that any modulo 16 periodicity will appear in the output image due to halftoning. Alternatively, if a dither mask or threshold location list is to be used, multiple realizations of it can be computed, stored, and chosen at random for each of the 16 x 16 regions to diminish the periodicity problem.

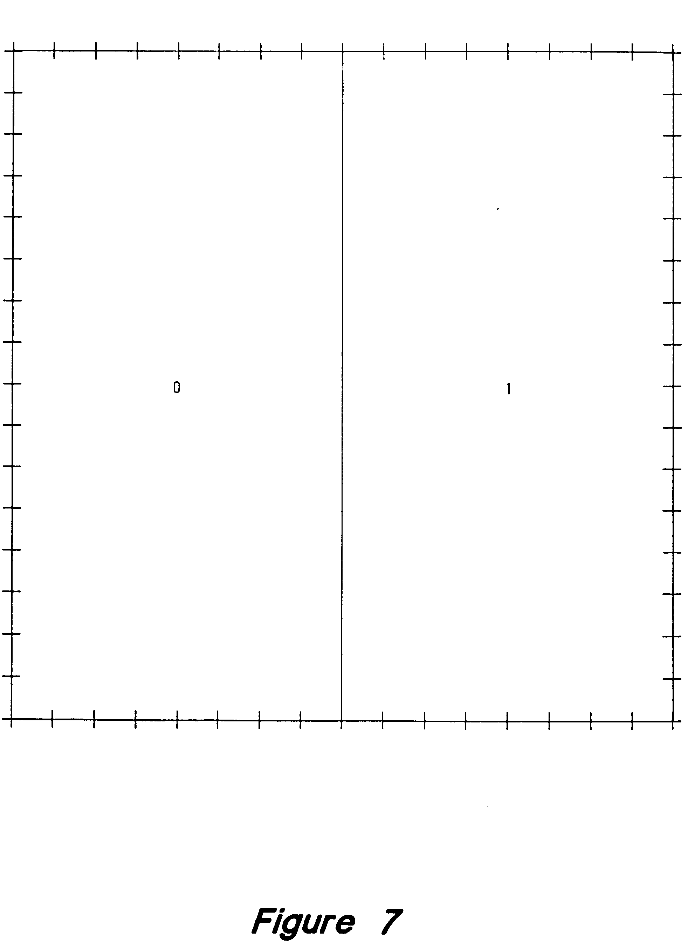

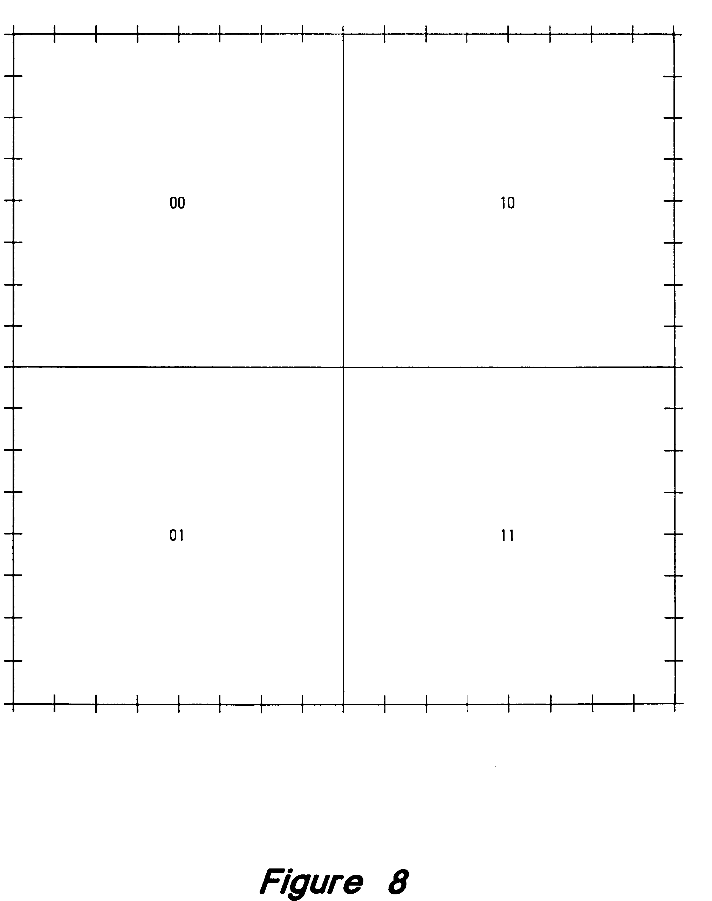

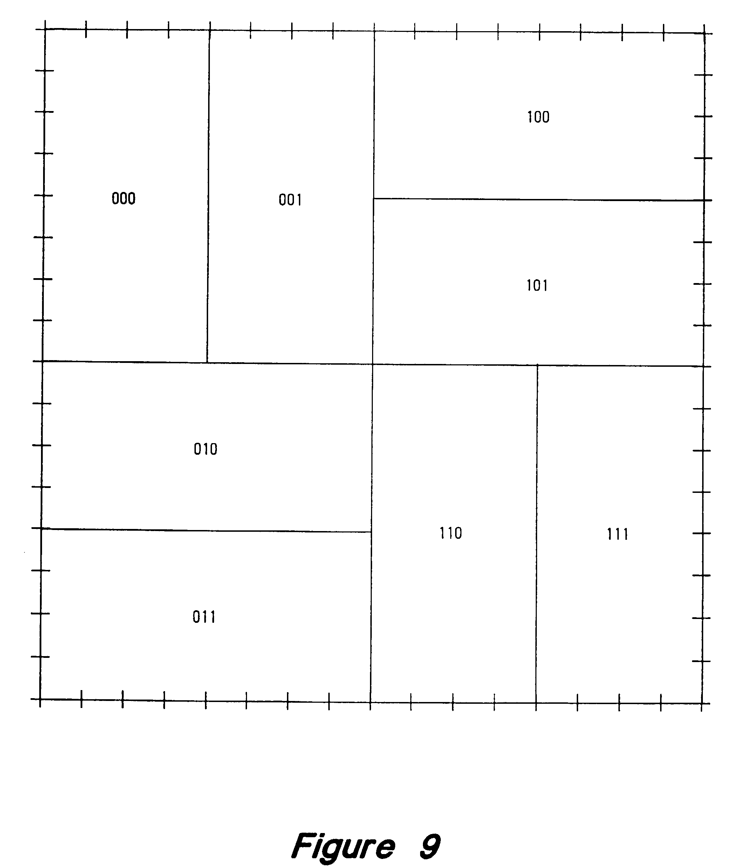

Other addressing implementations are possible. For example, a "parquet tile" method of recursively addressing a square region is one such method. One, two, and three levels of subdivision by this method are illustrated in Figures 7, 8 and 9, respectively. Eight levels are required to address a 16 x 16 region. One least significant bit is added to the address with each level of subdivision.

The addresses thus generated can be randomized in the same way as the quadtree addresses above, or by a different scheme which is somewhat more random. In this more random scheme, the general rule is that at any given level and position of addressing, if one position has been chosen, then the next one is the complement. That is, the bit that represents it must be complemented so that the position is in the "other half". In this way the anticorrelation requirement is met. If neither of the positions at a given level of addressing has been chosen, or both have, then the next time the position is reached, it can be randomly chosen. Thus for each position, an eight bit random number is proposed. Such bits of this number as are necessary to meet the above requirement are complemented to get the final address.

Thus the first address is a full eight bits random. The msb of the second address is required to be the complement of the msb of the first. The rest of the second address is random. For the third address, the msb is random but the msb of the fourth is the complement of the second bit of either the first or second address. The second bit of the fourth address is the complement of the second bit of the second or first address complementary to the choice at the third. The rest of the third and fourth addresses are random. As more and more addresses are located, there is less and less randomness available.

The halftoning is performed by incrementing through the thresholds. finding and using the location of the thresholds as they are computed.

Although the parquet tile method is not as fast as the quadtree approach, it is fairly simple. Aside from the random numbers, only boolean operations are required to produce an address, and it does run fast enough to do on the fly.

The disclosures in United States patent application no. 08/729,082, from which this application claims priority, and in the abstract accompanying this application are incorporated herein by reference.

## Claims

1. A method for producing a halftoned binary output image from a grayscale input image, comprising the steps of:
selecting a region of the input image; and
applying thresholds to pixels in the region to yield a halftoned binary area of the output image, such that locations within the region of thresholds close in value are random, consistent with being anticorrelated.

2. A method as set forth in claim 1, wherein the region is a N x N square of pixels.

3. A method as set forth in claim 2, wherein addresses for the thresholds within the region are generated using a quadtree addressing scheme or using a parquet tile addressing scheme.

4. A method as set forth in any preceding claim, wherein addresses within the region for the thresholds are retrieved from a list.

5. A method as set forth in claim 4, wherein the list is selected from a set of lists.

6. A method as set forth in claim 1, wherein the thresholds are stored in a mask of the region.

7. Apparatus for producing a halftoned binary output image from a grayscale input image, comprising the steps of:
means for selecting a region of the input image; and
means for applying thresholds to pixels in the region to yield a halftoned binary area of the output image, such that locations within the region of thresholds close in value are random, consistent with being auticorrelated.

8. Apparatus as set forth in claim 7, wherein the region is a N x N square of pixels.

9. Apparatus as set forth in claim 8, wherein addresses for the thresholds within the region are generated using a quadtree addressing scheme or using a parquet tile addressing scheme.

10. Apparatus as set forth in any one of claims 7 to 9, including one or more lists from which addresses within the region for the thresholds can be retrieved.

11. Apparatus as set forth in claim 7, the region including one or more masks in which the thresholds are stored.
